# DEMANDE DE BREVET EUROPEEN

(11) **EP 1 008 794 A1**
(43) Date de publication de la demande: **14.06.2000**
(21) Numéro de dépôt: 99403067.4
(22) Date de dépôt: 08.12.1999
(51) Int. Cl.: F16L 5/00

(54) **Dispositif de fixation traversante d'un tuyau ou analogue sur une paroi**

(30) Priorité: 10.12.1998 FR 9815606
(71) Demandeur: Rapid S.A., 75852 Paris (FR)
(72) Inventeur: Leon, Jean-Pierre René, 78800 Houilles (FR); Dutto, Christian Daniel, 92000 Nanterre (FR)
(74) Mandataire: Corret, Hélène

(57) **Abrégé**

L'invention concerne un dispositif de fixation traversante d'un tuyau ou analogue sur une paroi, telle qu'une cloison, ledit tuyau étant placé à l'intérieur d'une gaine annelée.

Selon l'invention, le dispositif comprend un boîtier (1) rigide en au moins deux parties (10, 11) séparables et comportant deux faces (12, 13) opposées en regard et raccordées entre elles par une face périphérique (14), une première face (12) comportant une ouverture (12a) pour le tuyau (4), lequel débouche à l'extérieur du boîtier, une deuxième face (13) étant destinée à recevoir ladite gaine annelée (5) et comportant des moyens (18) pour la maintenir en position et la face périphérique (14) coopérant avec des moyens d'accrochage (2) dudit boîtier sur ladite paroi (3), de telle sorte que ledit boîtier isole l'extrémité libre de la gaine qui débouche à l'intérieur du boîtier.

L'invention s'applique à l'industrie du bâtiment.

## Description

L'invention concerne un dispositif de fixation traversante d'un tuyau ou analogue sur une paroi, telle qu'une cloison.

Lors de la construction de bâtiments, il est nécessaire de faire traverser des cloisons à des tubes ou conduits, destinés notamment au transport de l'eau.

Ces tubes peuvent être placés dans une gaine de protection. Cette gaine présente l'avantage de faciliter la construction du bâtiment en permettant une préinstallation des tubes, avant la réalisation des sols ou des cloisons, et permet en outre d'en simplifier la maintenance, puisque le tuyau peut coulisser dans la gaine et donc être facilement remplacé.

Pour faire traverser une cloison à un tube, on perce un trou dans la cloison et on y glisse la gaine. Il faut ensuite maintenir la gaine en position pour boucher le trou dans la cloison, autour de la gaine, avec du béton ou du plâtre notamment.

Ce maintien demande une main-d'oeuvre supplémentaire et n'est pas toujours réalisé de manière efficace. Ainsi, du béton ou du plâtre peut pénétrer dans la gaine, ce qui empêche ultérieurement le coulissement du tuyau à l'intérieur de la gaine. Les opérations de maintenance ne peuvent donc plus être effectuées.

L'invention a pour but de pallier ces inconvénients en proposant un dispositif de fixation traversante pour un tuyau qui permet d'éviter l'introduction de tout matériau de construction dans la gaine, tout en simplifiant le montage traversant du tube dans la cloison, grâce à un maintien efficace de la gaine.

Ainsi, l'invention concerne un dispositif de fixation traversante d'un tuyau ou analogue sur une paroi, telle qu'une cloison, ce tuyau étant placé à l'intérieur d'une gaine annelée, caractérisé en ce qu'il comprend un boîtier rigide en au moins deux parties séparables et comportant deux faces opposés en regard, raccordées entre elles par une face périphérique, une première face comportant une ouverture pour le tuyau lequel est destiné à déboucher à l'extérieur du boîtier, une deuxième face étant destinée à recevoir ladite gaine annelée et comportant des moyens pour la maintenir en position, et la face périphérique coopérant avec des moyens d'accrochage du boîtier sur ladite paroi, de telle sorte que le boîtier isole l'extrémité libre de la gaine qui débouche à l'intérieur du boîtier.

De préférence, la deuxième face du boîtier se prolonge, vers l'extérieur du boîtier, par un conduit apte à recevoir ladite gaine.

Dans un mode de réalisation, ce conduit comporte au moins une nervure, destinée à coopérer avec ladite gaine annelée pour la fixer dans ledit conduit.

Dans un mode préféré de réalisation du dispositif selon l'invention, des moyens de fermeture des deux parties constitutives du boîtier sont prévus sur la face périphérique du boîtier et, le cas échéant, sur le conduit.

Le dispositif selon l'invention présente avantageusement une forme générale cylindrique.

Dans un mode de réalisation de l'invention, les moyens d'accrochage du boîtier sur la cloison sont constitués par un anneau dont le diamètre intérieur correspond au diamètre extérieur du boîtier, cet anneau supportant des pattes qui se déforment lors de l'introduction du boîtier dans l'anneau, pour réaliser l'accrochage du boîtier sur la cloison.

De préférence, la première face du boîtier s'étend au-delà de sa face périphérique, ledit anneau étant destiné à venir en butée contre ladite première face et ledit anneau supporte au moins deux pattes qui, au repos, sont légèrement inclinées vers l'intérieur de l'anneau et qui sont destinées à venir en contact avec la face périphérique du boîtier.

Les pattes de l'anneau présentent avantageusement au moins un bord denté en saillie vers l'extérieur de l'anneau, qui réalise l'accrochage du boîtier sur la cloison.

L'invention sera mieux comprise et d'autres buts, avantages et caractéristiques de celle-ci apparaîtront plus clairement à la lecture de la description qui suit et qui est faite au regard des dessins annexés d'exemples non limitatifs de réalisation de l'invention, et sur lesquels :
- la figure 1 est une vue éclatée en perspective du dispositif de fixation traversante selon l'invention, avant montage sur un orifice d'une cloison ;
- la figure 2 est une vue en perspective similaire à la figure 1, montrant le dispositif illustré à la figure 1 en cours de montage sur l'orifice ;
- la figure 3 est une vue en perspective selon la flèche III de la figure 2 du dispositif illustré aux figures 1 et 2, monté sur l'orifice ; et
- la figure 4 est une vue en perspective selon la flèche IV de la figure 3.

Les éléments communs aux différentes figures seront désignés par les mêmes repères.

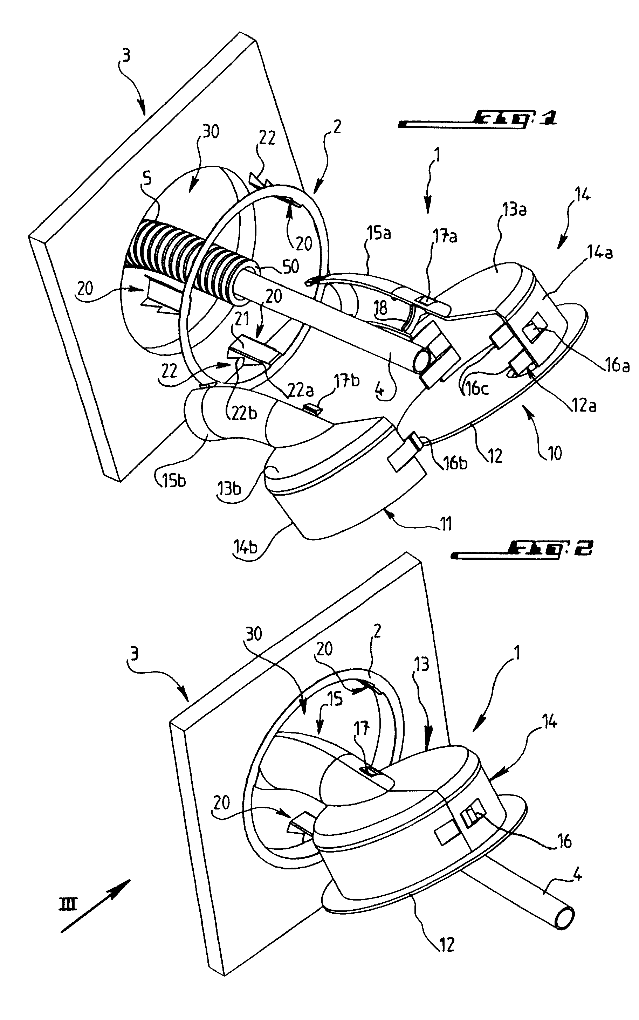

La figure 1 montre le dispositif de fixation traversante selon l'invention, à l'état démonté.

Ce dispositif comprend tout d'abord un boîtier rigide 1 qui est constitué en deux parties séparables 10 et 11. Il est nécessaire que le dispositif selon l'invention soit constitué en au moins deux parties séparables pour permettre l'introduction de la gaine, comme on le verra dans la suite de la description.

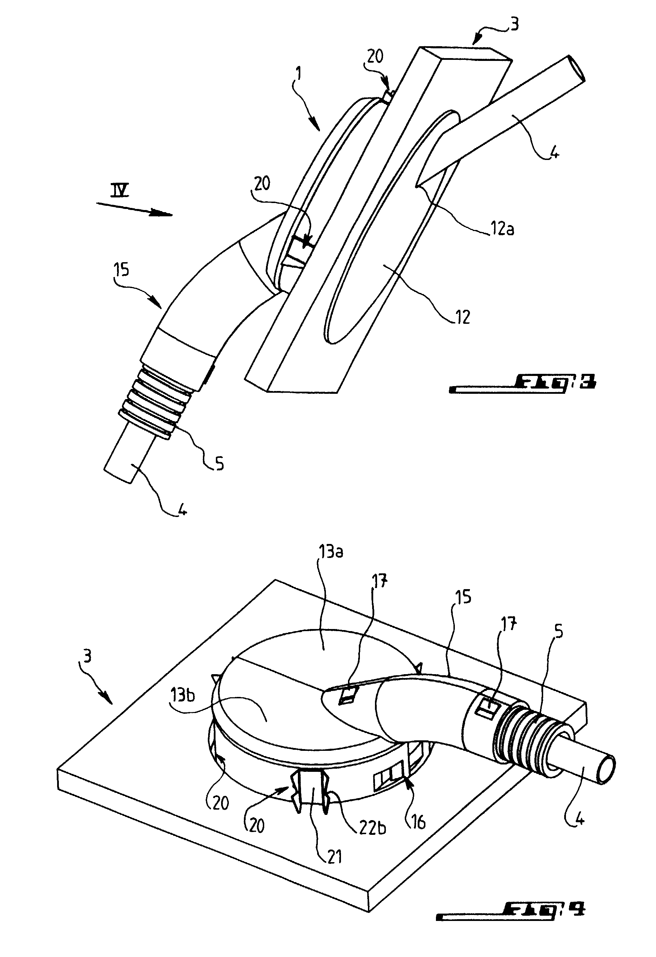

Comme le montre également la figure 2 qui illustre le dispositif selon l'invention en cours de montage, les deux parties constitutives du boîtier définissent une première face 12 et une deuxième face 13 opposées et en regard.

La deuxième face 13 est constituée de deux demi-faces 13a et 13b appartenant chacune respectivement à une partie constitutive 10, 11 du boîtier.

Ces deux faces 12 et 13 sont reliées entre elles par une face périphérique 14, constituée ici de deux demi-cylindres 14a et 14b appartenant respectivement à chacune des deux parties 10, 11.

Dans l'exemple illustré sur les figures, le dispositif 1 présente une forme générale cylindrique, mais l'invention n'est bien sûr pas limitée à cette forme de réalisation.

La figure 1 montre également qu'un orifice 12a est ménagé sur la première face 12 du boîtier, pour le passage d'un tube 4.

Par ailleurs, la deuxième face 13 se prolonge par un conduit 15 qui est constitué en deux parties 15a et 15b, chacune d'entre elles appartenant respectivement à une partie constitutive 10, 11 du boîtier 1.

Enfin, des moyens de fermeture des deux parties constitutives du boîtier sont prévus sur les deux faces constitutives 14a et 14b de la face périphérique 14 et sur les deux parties constitutives 15a et 15b du conduit 15.

Les moyens de fermeture 16 prévus sur la paroi périphérique sont constitués par au moins une patte 16b prévue sur une partie constitutive 11 du boîtier et destinée à s'insérer dans un orifice 16a prévu sur l'autre partie constitutive 10 du boîtier. Des pattes de guidage 16c peuvent également être prévues sur la partie constitutive 10 du boîtier.

De tels moyens de fermeture 16 peuvent être prévus à chaque extrémité libre des deux parties constitutives 14a et 14b de la face périphérique 14 du boîtier.

Des moyens de fermeture 17 sont également prévus sur le conduit 15. Ces moyens de fermeture peuvent notamment consister en une patte 17b, prévue sur la partie constitutive 15b du conduit 15 et destinée à s'insérer dans un orifice 17a prévu sur l'autre partie constitutive 15a du conduit.

Dans l'exemple illustré sur les figures, deux moyens de fermeture 17 sont prévus sur le conduit 15.

Le dispositif de fixation selon l'invention comprend également des moyens d'accrochage 2, permettant de fixer le boîtier 1 dans un orifice 30 prévu dans une cloison 3.

Ces moyens d'accrochage sont, dans cet exemple de réalisation, constitués par un anneau, notamment métallique.

Le diamètre intérieur de l'anneau correspond sensiblement au diamètre extérieur du boîtier 1 et notamment du cylindre défini par sa face périphérique 14.

Cet anneau 2 présente des pattes 20 en saillie, ici au nombre de trois. Ces pattes 20 sont de préférence régulièrement réparties sur le pourtour de l'anneau 2.

Par ailleurs, les pattes 20 sont avantageusement légèrement inclinées vers l'intérieur de l'anneau.

Chaque patte 20 comporte une face plane 21 qui est destinée à venir en contact avec la face périphérique 14 du boîtier 1. Cette face plane se prolonge, de part et d'autre, par un bord 22 définissant au moins une dent 22a, 22b.

La figure 1 illustre également un tube 4 qui est glissé dans une gaine annelée 5.

Le montage du dispositif de fixation traversante selon l'invention est réalisé de la façon suivante.

Le boîtier 1 étant en position ouverte, comme illustré à la figure 1, on place la gaine 5 dans le conduit 15, de telle sorte que son extrémité libre 50 débouche à l'intérieur du boîtier.

La gaine 5 est maintenue en position dans le conduit 15, grâce à des moyens de fixation qui peuvent notamment consister en une nervure 18 prévue à l'intérieur du conduit 15.

Le boîtier 1 est ensuite refermé grâce aux moyens de fermeture 16 et 17 prévus respectivement sur la face périphérique 14 et sur le conduit 15. Le boîtier 1 se trouve alors dans la position illustrée à la figure 2.

On peut alors, si cela n'a pas été réalisé précédemment, introduire le tube 4 dans la gaine 5, le tube 4 sortant du boîtier 1 par l'orifice 12a.

L'anneau 2 est placé dans l'orifice 30 de la cloison 3. Les dimensions de l'orifice 30 sont telles que l'anneau 2 vient se plaquer contre la cloison 3, ses pattes 20 traversant la cloison 3. Ceci est également illustré à la figure 2.

En cours de montage, la position relative du boîtier 1 et de l'anneau 2 est illustrée à la figure 2. Ainsi, le conduit 15 du boîtier 1 s'étend dans la même direction que les pattes 20 de l'anneau 2.

Comme le montrent notamment les figures 2 et 4, l'anneau 2 vient s'accrocher sur la cloison 3 grâce aux bords dentés 22. En particulier, dans l'exemple illustré, l'anneau 2 vient en contact avec la cloison 3 au niveau des dents 22a.

On peut ainsi prévoir plusieurs dents sur les pattes 20 de l'anneau pour que celui-ci soit apte à s'accrocher sur des cloisons d'épaisseurs différentes.

Le montage du dispositif de fixation selon l'invention se poursuit en insérant le boîtier 1 à l'intérieur de l'anneau 2.

La face périphérique 14 du boîtier 1 vient alors en contact avec les parties planes 21 des pattes 20 qui sont repoussées vers l'extérieur de l'orifice.

Ainsi, l'introduction du boîtier 1 dans l'orifice 30 contribue au bon maintien de l'anneau 2 dans la cloison.

Par ailleurs, l'anneau 2 vient alors en contact avec la première face 12 du boîtier qui s'étend au-delà de la face périphérique 14.

Le dispositif de fixation selon l'invention, la gaine 5 et le tube 4 se trouvent alors dans la position illustrée aux figures 3 et 4.

Ainsi, le dispositif de fixation selon l'invention permet de faire traverser une cloison 3 à un tube 4 ou analogue, tout en le maintenant en position.

Par ailleurs, le tube 4 est placé dans une gaine de protection 5 dont l'extrémité libre 50 débouche à l'intérieur du boîtier 1. Ainsi, est évité tout risque d'introduction de matériau de construction notamment, à l'intérieur de la gaine 5. Le dispositif de fixation selon l'invention permet donc un montage facile d'un tube ou analogue à travers une cloison 3, tout en garantissant que le tube 4 pourra facilement coulisser à l'intérieur de la gaine 5, ce qui permettra d'assurer la maintenance du tuyau 4.

L'invention n'est bien sûr pas limitée aux modes de réalisation qui viennent d'être décrits et elle comprend tous les équivalents techniques des moyens décrits et leurs cobminaisons si celles-ci entrent dans le cadre des revendications.

En particulier, le boîtier du dispositif de fixation selon l'invention n'est pas nécessairement de forme cylindrique et d'autres moyens d'accrochage du boîtier sur la cloison peuvent être prévus. De plus, la position relative de l'orifice 12a pour le tube 4 et du conduit 15 pour la gaine 5 peut être modifiée, selon les applications.

Enfin, les signes de référence insérés après les caractéristiques techniques figurant dans les revendications ont pour seul but de faciliter la compréhension de ces dernières et ne sauraient en limiter la portée.

## Revendications

1. Dispositif de fixation traversante d'un tuyau ou analogue sur une paroi, telle qu'une cloison, ledit tuyau étant placé à l'intérieur d'une gaine annelée, caractérisé en ce qu'il comprend un boîtier (1) rigide en au moins deux parties (10, 11) séparables et comportant deux faces (12, 13) opposées en regard, raccordées entre elles par une face périphérique (14), une première face (12) comportant une ouverture (12a) pour le tuyau (4) lequel est destiné à déboucher à l'extérieur du boîtier (1), une deuxième face (13) étant destinée à recevoir ladite gaine annelée (5) et comportant des moyens (18) pour la maintenir en position, et la face périphérique (14) coopérant avec des moyens d'accrochage (2) dudit boîtier (1) sur ladite paroi (3), de telle sorte que ledit boîtier (1) isole l'extrémité libre (50) de la gaine qui débouche à l'intérieur du boîtier.

2. Dispositif de fixation selon la revendication 1, caractérisé en ce que ladite deuxième face (13) se prolonge, vers l'extérieur du boîtier, par un conduit (15) apte à recevoir ladite gaine (5).

3. Dispositif de fixation selon la revendication 2, caractérisé en ce que ledit conduit (15) comporte au moins une nervure (18) destinée à coopérer avec ladite gaine annelée (5) pour la fixer dans ledit conduit.

4. Dispositif de fixation selon l'une des revendications 1 à 3, caractérisé en ce que des moyens de fermeture (16, 17) des deux parties constitutives (12, 13) du boîtier (1) sont prévus sur la face périphérique (14) du boîtier et, le cas échéant, sur le conduit (15).

5. Dispositif de fixation selon l'une des revendications 1 à 4, caractérisé en ce que ledit boîtier (1) présente une forme générale cylindrique.

6. Dispositif de fixation selon l'une des revendications 1 à 5, caractérisé en ce que les moyens d'accrochage du boîtier (1) sur la cloison (3) sont constitués par un anneau (2) dont le diamètre intérieur correspond au diamètre extérieur du boîtier, cet anneau supportant des pattes (20) qui se déforment lors de l'introduction du boîtier dans l'anneau, pour réaliser l'accrochage du boîtier sur la cloison.

7. Dispositif de fixation selon la revendication 6, caractérisé en ce que la première face (12) du boîtier s'étend au-delà de la face périphérique (14) du boîtier, ledit anneau (2) étant destiné à venir en butée contre ladite première face (12) et en ce que ledit anneau supporte au moins deux pattes (20) qui, au repos, sont légèrement inclinées vers l'intérieur de l'anneau et qui sont destinées à venir en contact avec la face périphérique (14) du boîtier.

8. Dispositif de fixation selon la revendication 7, caractérisé en ce que lesdites pattes (20) présentent au moins un bord denté (22) en saillie vers l'extérieur de l'anneau, qui réalise l'accrochage du dispositif sur la cloison.
